# EUROPÄISCHE PATENTSCHRIFT

(11) **EP 2 606 320 B1**
(45) Veröffentlichungstag und Bekanntmachung des Hinweises auf die Patenterteilung: **04.09.2019**
(21) Anmeldenummer: 11748296.8
(22) Anmeldetag: 11.07.2011
(51) Int. Cl.: G01F 23/296, G01F 23/22

(54) **VORRICHTUNG ZUR BESTIMMUNG UND/ODER ÜBERWACHUNG ZUMINDEST EINES VORBESTIMMTEN FÜLLSTANDS**
DEVICE FOR DETERMINING AND/OR MONITORING AT LEAST ONE PREDETERMINED FILL LEVEL
DISPOSITIF DE DÉTERMINATION ET/OU DE CONTRÔLE D'AU MOINS UN NIVEAU DE REMPLISSAGE PRÉDÉFINI

(30) Priorität: 20.08.2010 DE 102010039585
(43) Veröffentlichungstag der Anmeldung: 26.06.2013
(73) Patentinhaber: Endress+Hauser SE+Co. KG, 79689 Maulburg (DE)
(72) Erfinder: D'ANGELICO, Sascha, 79595 Rümmingen (DE); LOPATIN, Sergej, 79540 Lörrach (DE); FERRARO, Franco, 79739 Schwörstadt (DE)
(74) Vertreter: Andres, Angelika Maria
(86) Internationale Anmeldenummer: PCT/EP2011/061724
(87) Internationale Veröffentlichungsnummer: WO 2012/022542

(56) Entgegenhaltungen:
- EP-A2- 0 810 423
- EP-A2- 1 750 104
- DE-A1- 19 720 519
- DE-A1-102008 050 266

## Beschreibung

Die vorliegende Erfindung betrifft eine Vorrichtung zur Bestimmung und/oder Überwachung zumindest eines vorbestimmten Füllstandes einer Flüssigkeit in einem Behälter, mit einer Sensoreinheit, mindestens umfassend eine auf der Höhe des vorbestimmten Füllstandes anordenbare mechanisch schwingfähige Einheit, eine Sendeeinheit, welche die schwingfähige Einheit mittels einem elektrischen Sendesignal zu mechanischen Schwingungen anregt, und eine Empfangseinheit, welche mechanisch und elektrisch mit der Sendeeinheit gekoppelt ist, und welche die Schwingungen der schwingfähigen Einheit in ein elektrisches Empfangssignal umwandelt, und mit einer Elektronikeinheit, mindestens umfassend eine Auswerteeinheit, welche aus dem elektrischen Empfangssignal bestimmt, ob die schwingfähige Einheit von der Flüssigkeit bedeckt oder unbedeckt ist, und eine Regeleinheit, welcher eine zwischen dem elektrischen Sendesignal und dem elektrischen Empfangssignal bestehende Phasendifferenz auf einen bestimmten Wert regelt, bei dem die schwingfähige Einheit Schwingungen mit einer Resonanzfrequenz ausführt, und welche mit der Sendeeinheit, der Empfangseinheit und der schwingfähigen Einheit einen Schwingkreis bildet. Neben einem Grenzfüllstand sind auch die Dichte und/oder die Viskosität des Mediums bestimmbar. Bei der schwingfähigen Einheit handelt es sich beispielsweise um eine Schwinggabel.

In der Industrie kommen Füllstandsmessgeräte zur Überwachung eines vorbestimmten Füllstands einer Flüssigkeit häufig als Überfüllsicherung oder Trockenlaufschutz bei Pumpen zum Einsatz. Ein vibronischer Grenzstandschalter, mit welchem zudem Dichte und Viskosität des Mediums bestimmbar sind, ist beispielsweise in der DE 4419617 C2 beschrieben. Dieser umfasst eine schwingfähige Einheit, eine elektromechanische Wandlereinheit zur Anregung der schwingfähigen Einheit zu mechanischen Schwingungen mittels elektrischen Sendesignalen und zum Empfangen der mechanischen Schwingungen der schwingfähigen Einheit und Umwandeln derselben in ein elektrisches Empfangssignal, eine Auswerteeinheit, welche an Hand der Frequenz des Empfangssignals bestimmt, ob die schwingfähige Einheit mit Medium bedeckt ist, und einen Regelkreis, welcher die Phasenverschiebung zwischen dem Sendesignal und dem Empfangssignal auf einen konstanten Wert regelt, wobei der Wert derart gewählt ist, dass die schwingfähige Einheit mit der Resonanzfrequenz schwingt. Der Regelkreis besteht im einfachsten Fall aus einem Verstärker und einem Phasenschieber, wobei das Empfangssignal dem Verstärker zugeführt wird und über den Phasenschieber auf das Sendesignal rückgekoppelt wird.

Die elektromechanische Wandlereinheit wird in der Regel von einem oder mehreren piezoelektrischen Elementen gebildet. Hierbei ist entweder ein Piezoelement sowohl als Sender als auch als Empfänger ausgestaltet oder mehrere Piezoelemente, welche jeweils nur Sender oder nur Empfänger bilden, sind in einem Stapel angeordnet.

Schwingfähige Einheit, Wandlereinheit und Regelkreis bilden die Komponenten eines Schwingsystems, wobei die Komponenten elektrisch und mechanisch nicht vollständig getrennt sind, sodass mechanische und elektrische Kopplungseffekte auftreten. Diese äußern sich in Form von zusätzlichen Signalen im Empfangssignal, welche dem Messsignal überlagert sind und relativ zum Sendesignal in Abhängigkeit der Ausgestaltung der Wandlereinheit eine Phasenverschiebung von 0° oder 180° aufweisen. Das Messsignal besitzt hierbei die Gestalt eines Sinus, während die kopplungsbedingten zusätzlichen Signale Rechtecksignale sind.

Solange die schwingfähige Einheit ungedämpft mit der Resonanzfrequenz schwingt sind die Kopplungseffekte vernachlässigbar. Mit zunehmender Dämpfung jedoch wird die Amplitude des eigentlichen Messsignals kleiner und das überlagerte Rechtecksignal gewinnt an Bedeutung. Hierbei verschiebt sich die Phasenverschiebung zwischen Sendesignal und Empfangssignal von 90° in Richtung 0° bzw. 180°. Dominiert die Kopplung, schwingt das Schwingsystem vorzugsweise mit einer von der Elektronikeinheit vorgegebenen Abrissfrequenz bei 0° bzw. 180°, je nach Phasenverschiebung zwischen Kopplung und Sendesignal. In Abhängigkeit der Ausgestaltung der Elektronikeinheit existiert keine Abrissfrequenz zu der entsprechenden Phasenverschiebung und das Schwingsystem schwingt gar nicht mehr. Je höher die Dämpfung der Schwingungen ist, desto früher ist die mechanische Schwingung bei der Resonanzfrequenz nicht mehr möglich. Es gilt also, die Kopplung so weit wie möglich zu unterbinden, um die maximale Viskosität, bei welcher die schwingfähige Einheit noch schwingfähig ist, zu steigern.

Im Stand der Technik wird diesem Problem durch eine besondere Ausgestaltung der elektromechanischen Wandlereinheit begegnet, welche zum einen die Abhängigkeit der Phasendifferenz, welche der Resonanzfrequenz entspricht, von der Güte des Schwingsystems eliminiert und weiterhin die Kopplungseffekte kompensiert. Eine Lösungsvariante für eine elektromechanische Wandlereinheit, welche aus einem einzelnen piezoelektrischen Element besteht, das gleichzeitig Sender und Empfänger ist, wird in der EP 0875740 A1 beschrieben. Das piezoelektrische Element ist in drei Bereiche unterteilt, wobei ein erster und ein zweiter Bereich entgegengesetzt zu einem dritten Bereich polarisiert sind. Der erste und der dritte Bereich dienen als Sender, der zweite als Empfänger. Durch die entgegengesetzte Polarisation sind die beiden Sendesignale gegenphasig. Die beiden kopplungsbedingten zusätzlichen Signale sind somit wie die Sendesignale ebenfalls gegenphasig und weisen die gleichen Amplituden auf, sodass sie sich gegenseitig kompensieren und die Kopplung eliminiert ist. In der EP 0875742 A1 ist eine Lösung für den Fall beschrieben, dass die elektromechanische Wandlereinheit mindestens einen Sender und mindestens einen Empfänger aufweist, z.B. in Form von in einem Stapel angeordneten piezoelektrischen Elementen. Die Lösung besteht darin, dass die das Empfangssignal übertragende Leitung mit der das Sendesignal übertragenden Leitung über eine elektrische Impedanz verbunden ist. Diese ist so gewählt, dass sich hierdurch die auf Grund von mechanischer und elektrischer Kopplung auftretenden Zusatzsignale gegenseitig kompensieren. Beide Varianten lösen das Problem der Kopplung durch Umgestaltung der Gabelbaugruppe. Es ist daher nicht möglich, Füllstandsmessgeräte mit herkömmlicher Wandlereinheit nachträglich umzugestalten.

EP 1750104 A2 offenbart eine Vorrichtung und ein Verfahren zur Vibrations-Füllstand-Grenzstanderfassung mit einer Schaltung, bei welcher ein Zweig mit einem Kompensationskondensator (2) parallel zu einem Zweig mit einem Piezoelement (11) geschaltet ist zum Kompensieren eines von der Piezokapazität abhängigen Umladestroms des Piezoelements (11).

Die Aufgabe der Erfindung besteht somit darin, eine Vorrichtung zur Grenzfüllstandsmessung bereit zu stellen, welche einfach nachrüstbare Mittel aufweist, die es ermöglichen auch bei hoher Viskosität zuverlässig zu messen.

Die Aufgabe wird für eine eingangs beschriebene Vorrichtung dadurch gelöst, dass die Elektronikeinheit einen Kompensationspfad mit einer Kompensationseinheit aufweist, welche zur Kompensation von zusätzlichen Signalanteilen im Empfangssignal, die aus der mechanischen und/oder elektrischen Kopplung zwischen Sendeeinheit und Empfangseinheit resultieren, zumindest zeitweise aus dem Sendesignal ein Kompensationssignal erzeugt und dem Empfangssignal zuführt, wobei die Kompensationseinheit das Kompensationssignal derart erzeugt, dass das Kompensationssignal den zusätzlichen Signalanteilen im Empfangssignal entgegengerichtet ist. Sendeeinheit und Empfangseinheit werden im Folgenden kurz als Sende-/Empfangseinheit bezeichnet. Das Eingangssignal der Sende-/Empfangseinheit entspricht weiterhin dem unveränderten Sendesignal, d.h. lediglich das dem Kompensationspfad als Eingangssignal bereitgestellte Sendesignal wird verändert.

Bei einer hohen Dämpfung der Schwingungen sinkt die Amplitude des eigentlichen Empfangssignals ab, sodass die von der Dämpfung unabhängigen kopplungsbedingten Anteile zunehmend ins Gewicht fallen und das Empfangssignal ab einer bestimmten Dämpfung nur noch aus den kopplungsbedingten Anteilen besteht. Die Schwingfrequenz ist dann die von der Elektronikeinheit vorgegebene untere Abrissfrequenz. Das Kompensationssignal ist den zusätzlichen kopplungsbedingten Signalanteilen entgegengerichtet, d.h. um 180° phasenverschoben. Durch das Kompensationssignal wird der zusätzliche Signalanteil zumindest teilweise kompensiert, sodass die Schwingung mit einer durch die schwingfähige Einheit vorgegebenen Sensorfrequenz wieder möglich ist. Die Höhe des Kompensationssignals ist dynamisch anpassbar und wird derart eingestellt, dass die zusätzlichen Signalanteile nicht vollständig kompensiert werden, da sonst im Falle einer vollständigen Dämpfung der schwingfähigen Einheit mit Medium der Schwingkreis nicht mehr schwingfähig wäre und somit nicht einmal mit der Abrissfrequenz schwingen würde.

Die erfindungsgemäße Vorrichtung unterscheidet sich lediglich in der Ausgestaltung der Elektronikeinheit von herkömmlichen Vorrichtungen zur vibronischen Bestimmung eines Grenzfüllstands, der Dichte und/oder der Viskosität eines Mediums. Somit sind letztere durch Austausch der Elektronikeinheit aufwertbar und in ihrem Anwendungsbereich erweiterbar. Vibronische Füllstandsmessgeräte sind in der Regel modular aufgebaut, sodass ein Austausch der Elektronikeinheit schnell und einfach erfolgen kann, ohne dass der Sensor, d.h. die schwingfähige Einheit mit dem Prozessanschluss, aus dem Prozess entfernt werden muss. Zudem ist die Lösung unabhängig von der Ausgestaltung der elektromechanischen Wandlereinheit und somit vielseitig einsetzbar.

In der erfindungsgemäßen Lösung modifiziert die Kompensationseinheit zur Erzeugung des Kompensationssignals das Sendesignal im Kompensationspfad in Abhängigkeit einer aktuellen Schwingfrequenz des Schwingkreises. Die Kompensationseinheit erzeugt zumindest dann ein Kompensationssignal, wenn die Schwingfrequenz keiner gültigen Sensorfrequenz entspricht. Eine gültige Sensorfrequenz ist eine Frequenz, welche in einem Bereich liegt, der von der Schwingfrequenz einer bedeckten schwingfähigen Einheit und derjenigen einer unbedeckten schwingfähigen Einheit, jeweils mit bestimmten Toleranzen, begrenzt wird. Ist die schwingfähige Einheit nicht schwingfähig, beispielsweise wegen einer zu hohen Dämpfung oder Viskosität des Mediums oder auf Grund einer Blockade der schwingfähigen Einheit, liegt die Frequenz des Schwingkreises außerhalb dieses Bereiches. Der Schwingkreis schwingt dann mit einer von der Elektronikeinheit vorgegebenen unteren oder oberen Abrissfrequenz, welche von der Sensoreinheit unabhängig ist, oder er schwingt gar nicht.

Gemäß der Erfindung weist die Kompensationseinheit zumindest ein einstellbares dämpfendes Element auf. Hiermit verbunden ist eine weitere Ausgestaltung, nach welcher das dämpfende Element ein Spannungsteiler oder Verstärker ist. Die Amplitude des im Kompensationspfad erzeugten Kompensationssignals ist somit einstellbar, sodass die für die jeweiligen Rahmenbedingungen notwendige Kompensation eingestellt werden kann. Die notwendige Kompensationshöhe hängt beispielsweise von der aktuellen Temperatur oder dem aktuellen Druck ab und verändert sich darüber hinaus während der Lebensdauer der Vorrichtung auf Grund von Alterungserscheinungen. Durch eine dynamische Kompensation, bei welcher die Höhe der Kompensation nicht fest eingestellt ist, sondern kontinuierlich oder in diskreten Schritten gesteigert wird, beginnt die schwingfähige Einheit bei der passenden Kompensationshöhe wieder mit der Resonanzfrequenz zu schwingen, sofern der Grund für die Schwingung mit der Abrissfrequenz bzw. dem Aussetzen der Schwingung in einer zu hohen Dämpfung der Schwingungen bzw. einer zu hohen Viskosität lag.

Eine vorteilhafte Weiterbildung beinhaltet, dass das dämpfende Element mehrere Dämpfungsgrade aufweist. Beispielsweise sind die Dämpfungsgrade durch einzeln zuschaltbare Widerstände realisiert oder die Einstellung des Dämpfungsgrades erfolgt digital. In letzterem Fall sind die Dämpfungsgrade kontinuierlich einstellbar.

In einer Ausgestaltung der erfindungsgemäßen Vorrichtung weist die Kompensationseinheit ein invertierendes Element auf. Dieses ist bevorzugt vor dem dämpfenden Element angeordnet. Je nach Ausgestaltung der Sende-/Empfangseinheit weist der kopplungsbedingte Signalanteil eine Phasenverschiebung von 0° oder von 180° relativ zum Sendesignal auf, sodass zu deren Kompensation ein invertiertes Sendesignal erforderlich sein kann. Um eine hohe Flexibilität zu gewährleisten kann das invertierende Element auch in Abhängigkeit der Ausgestaltung der Sende-/Empfangseinheit zuschaltbar sein.

Eine weitere Aufgabe der Erfindung ist es, ein Verfahren zur Kompensation von zusätzlichen Signalanteilen im Empfangssignal einer Vorrichtung der eingangs beschriebenen Art anzugeben, wobei die zusätzlichen Signalanteile aus der mechanischen und/oder elektrischen Kopplung zwischen Sendeeinheit und Empfangseinheit resultieren.

Die Aufgabe wird dadurch gelöst, dass aus dem Sendesignal zumindest zeitweise ein Kompensationssignal erzeugt wird, welches den aus der Kopplung resultierenden zusätzlichen Signalanteilen entgegengerichtet ist, und dass das Kompensationssignal dem Empfangssignal zugeführt wird.

Gemäß einer ersten Ausgestaltung des erfindungsgemäßen Verfahrens wird das Sendesignal mit einem einstellbaren Verstärkungsfaktor verstärkt und dem Empfangssignal zugeführt. Der Verstärkungsfaktor ist in der Regel negativ, sodass das zur Erzeugung des Kompensationssignals verwendete Sendesignal gedämpft wird. In einer Ausgestaltung des Verfahrens wird das Sendesignal zur Erzeugung des Kompensationssignals invertiert. Ob ein Invertieren erforderlich ist hängt von der Phasenverschiebung der zusätzlichen Signalanteile relativ zum Sendesignal ab. In jedem Fall wird das Kompensationssignal derart erzeugt, dass es relativ zu den kopplungsbedingten zusätzlichen Signalanteilen um 180° phasenverschoben ist. Das Zuführen des Kompensationssignals erfolgt beispielsweise über ein in den Regelkreis eingebrachtes addierendes Bauteil oder kontaktlos, z.B. über einen Kondensator. Durch den einstellbaren Verstärkungsfaktor kann die Kompensation dynamisch angepasst werden. Der erforderliche Kompensationsgrad bei einer bestimmten Dämpfung durch das Medium hängt beispielsweise von der Umgebungstemperatur, dem Druck oder Alterungserscheinungen der Vorrichtung ab. Durch den einstellbaren Verstärkungsfaktor ist die Kompensation an die aktuellen Erfordernisse anpassbar, sodass zu jeder Zeit eine geeignete Kompensation einstellbar ist.

Eine weitere Ausgestaltung des Verfahrens sieht vor, dass die aktuelle Schwingfrequenz des Schwingkreises bestimmt wird, und dass für den Fall, dass die Schwingfrequenz einer gültigen, der bedeckten oder unbedeckten schwingfähigen Einheit zugeordneten Sensorfrequenz entspricht, keine Kompensation stattfindet. Der Kompensationspfad wird dann beispielsweise abgetrennt oder ausgeschaltet, oder das Sendesignal wird so weit gedämpft, dass am Ausgang des Kompensationspfades kein Kompensationssignal mehr anliegt. Entspricht die Sensorfrequenz einer gültigen Sensorfrequenz ist die mindestens eine zu bestimmende Prozessgröße bestimmbar. Solange die Schwingfrequenz einer gültigen Sensorfrequenz entspricht, ist daher keine Kompensation erforderlich. Die Kompensation kann jedoch auch von der Vorgeschichte abhängen. In einer Ausgestaltung wird für den Fall, dass die Schwingung auf Grund der Kompensation wieder eingesetzt hat, die eingestellte Kompensation beibehalten.

Eine weitere Ausgestaltung beinhaltet, dass die aktuelle Schwingfrequenz des Schwingkreises bestimmt wird, dass für den Fall, dass die Schwingfrequenz keiner gültigen, der bedeckten oder unbedeckten schwingfähigen Einheit zugeordneten Sensorfrequenz entspricht, für die Kompensation der geringstmögliche Kompensationsgrad eingestellt wird, und dass der Kompensationsgrad so lange erhöht wird, bis die Schwingfrequenz einer gültigen Sensorfrequenz entspricht, oder, falls keine gültige Sensorfrequenz erreicht wird, bis der höchstmögliche Kompensationsgrad erreicht ist oder die Schwingfrequenz einer von der Elektronikeinheit vorgegebenen oberen Abrissfrequenz entspricht. Solange das Kompensationssignal eine geringere Signalhöhe aufweist als der kopplungsbedingte Signalanteil, findet eine Unterkompensation statt und eine weitere Erhöhung der Kompensation ist möglich, sofern die maximal mögliche Kompensation noch nicht erreicht ist. Das Kompensationssignal und der kopplungsbedingte Signalanteil im Empfangssignal weisen relativ zueinander eine Phasenverschiebung von 180° auf; der kopplungsbedingte Signalanteil und das Sendesignal eine Phasenverschiebung von 0° oder 180°. Im Fall einer Überkompensation dominiert das Kompensationssignal, sodass zwischen Sendesignal und Empfangssignal eine Phasenverschiebung von 180° oder 0° vorliegt. Im Fall einer komplett bedämpften schwingfähigen Einheit stellt sich über der Regeleinheit ebenfalls eine Phasenverschiebung von 180° oder 0° und somit eine mit dieser Phasenverschiebung einhergehende obere Abrissfrequenz ein, sofern die Schwingung mit einer oberen Abrissfrequenz möglich ist.

Gemäß einer Ausgestaltung des Verfahrens wird die Kompensation beendet, sobald der höchstmögliche Kompensationsgrad eingestellt und keine gültige Sensorfrequenz erreicht ist, oder die von der Elektronikeinheit vorgegebene obere Abrissfrequenz erreicht ist. In einer alternativen Ausgestaltung wird die Kompensation in umgekehrter Richtung weitergeführt, d.h. von der größtmöglichen Kompensation ausgehend wird die Kompensation immer weiter verringert, bis die Kompensation ausgeschaltet ist. Bei beiden Ausgestaltungen kann sich ein erneuter Kompensationsdurchlauf anschließen.

In einer Ausgestaltung des Verfahrens wird der Kompensationsgrad beibehalten, sobald die Schwingfrequenz einer gültigen Sensorfrequenz entspricht. In einer alternativen Ausgestaltung wird die Kompensation beendet, sobald die Schwingfrequenz einer gültigen Sensorfrequenz entspricht, oder der Kompensationsgrad wird allmählich verringert, sodass nur die minimal notwendige Kompensation durchgeführt wird. Springt die Schwingfrequenz wieder auf eine ungültige Sensorfrequenz oder setzt die Schwingung aus, wird die Kompensation wieder aufgenommen bzw. die Kompensation erhöht.

Der Schutzumfang der Erfindung wird durch die Merkmale der Ansprüche definiert.

Die Erfindung wird anhand der nachfolgenden Figuren näher erläutert. Gleiche Teile in den Figuren sind hierbei jeweils mit gleichen Bezugszeichen gekennzeichnet.
- Fig. 1: zeigt den schematischen Aufbau einer Sensoreinheit;
- Fig. 2a: zeigt schematisch die Komponenten eines Schwingsystems gemäß Stand der Technik;
- Fig. 2b: zeigt schematisch die Komponenten eines erfindungsgemäßen Schwingsystems;
- Fig. 3: zeigt eine Skizze des Aufbaus einer erfindungsgemäßen Elektronikeinheit;
- Fig. 4: zeigt ein Flussdiagramm des Kompensationsverfahrens.

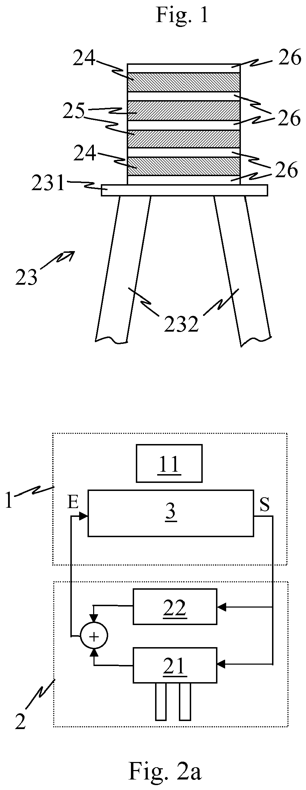

In Fig. 1 ist ein Beispiel für eine Sensoreinheit 2 dargestellt, welche sowohl Bestandteil eines Füllstandsmessgerätes aus dem Stand der Technik, als auch eines erfindungsgemäßen Füllstandsmessgerätes sein kann. Die schwingfähige Einheit 23 nimmt hierbei die Gestalt einer Gabel mit zwei Zinken 232 an, wobei die Zinken 232 auf einer Membran 231 angeordnet sind. Die Membran 231 bildet beispielsweise den Abschluss eines rohrförmigen Gehäuses, in welchem die Sende-/Empfangseinheit angeordnet ist. Die Sende-/Empfangseinheit besteht hier aus mehreren in einem Stapel angeordneten piezoelektrischen Elementen. Die inneren beiden piezoelektrischen Elemente bilden die Sendeeinheit 25, welche die mechanisch schwingfähige Einheit 23 zu Schwingungen anregt. Die beiden äußeren Elemente dienen als Empfangseinheit 24 und erzeugen aus den empfangenen mechanischen Schwingungen ein elektrisches Empfangssignal E. Die piezoelektrischen Elemente von Sendeeinheit 25 und Empfangseinheit 24 weisen jeweils zwei Elektroden auf, welche auf einander gegenüberliegenden Flächen der piezoelektrischen Elemente angeordnet sind. Die einzelnen piezoelektrischen Elemente sind durch Isolationen 26 elektrisch voneinander getrennt. In anderen Ausgestaltungen sind Sendeeinheit 25 und Empfangseinheit 24 nicht separat ausgebildet, sondern ein einziges piezoelektrisches Element bildet sowohl die Sendeeinheit 25 als auch die Empfangseinheit 24. Die Erfindung umfasst beide Varianten.

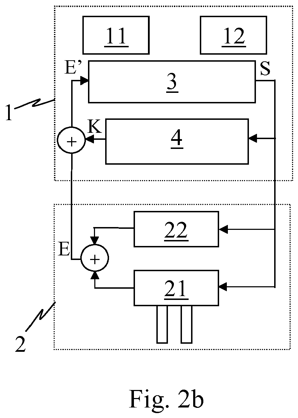

In Fig. 2a und Fig. 2b sind schematisch die Komponenten des Schwingsystems einer Vorrichtung zur vibronischen Grenzfüllstandsmessung dargestellt, wobei Fig. 2a das Schwingsystem einer aus dem Stand der Technik bekannten Vorrichtung und Fig. 2b das Schwingsystem einer erfindungsgemäßen Vorrichtung zeigt. Das Schwingsystem wird von der Sensoreinheit 2 und dem Regelkreis gebildet. Mechanisch besteht die Sensoreinheit 2 aus zwei Komponenten: der schwingfähigen Einheit 23 und der Sende-/Empfangseinheit 24, 25. Über Zuleitungen ist die Sende-/Empfangseinheit 24, 25 mit der Elektronikeinheit 1 verbunden, welche unter anderem eine Regeleinheit 3 mit den Komponenten zur Einstellung der Phasenverschiebung zwischen Sendesignal S und Empfangssignal E bzw. Erzeugung des Sendesignals S und eine Auswerteeinheit 11 enthält. Neben den mechanischen Komponenten 21 weist die Sensoreinheit 2 noch eine weitere Komponente auf, die Kopplung 22. Diese ist zum einen auf die mechanische Kopplung zwischen Sendeeinheit 25 und Empfangseinheit 24 und zum anderen auf deren elektrische Kopplung durch die Zuleitungen zurückzuführen. Die Kopplung 22 führt zu einem zusätzlichen Signalanteil in Form einer Rechteckspannung im Empfangssignal E und ist auch im Sendesignal S enthalten, da das Sendesignal S durch Rückkopplung des verstärkten und phasenverschobenen Empfangssignals E gebildet wird.

Die in Fig. 2b gezeigte Elektronikeinheit 1 enthält neben der Auswerteeinheit 11 und der Regeleinheit 3 zur Erzeugung des Sendesignals S eine Kompensationseinheit 4 und einen Mikrocontroller 12. Das Sendesignal S wird nicht nur der Sensoreinheit 2 zugeführt, sondern auch der Kompensationseinheit 4. Die Kompensationseinheit 4 umfasst mehrere in einem Kompensationspfad angeordnete Elemente, welche ein modifiziertes Sendesignal erzeugen und als Kompensationssignal K zu dem Empfangssignal E addieren. Diese Signalsumme E' bildet das Eingangssignal des Regelkreises und wird der Regeleinheit 3 zugeführt. Die Kompensationseinheit 4 modifiziert das Sendesignal S derart, dass es den im Empfangssignal E enthaltenen kopplungsbedingten Signalzusatz bei der Addition zumindest teilweise kompensiert. Idealerweise findet eine leichte Unterkompensation statt. Anstelle der Addition der Signale kann das von der Kompensationseinheit 4 erzeugte Kompensationssignal K dem Empfangssignal E auch anderweitig, beispielsweise kapazitiv, zugeführt werden. Wesentlich ist, dass eine Überlagerung zwischen Empfangssignal E und Kompensationssignal K stattfindet, sodass das gegenüber dem kopplungsbedingten Signalzusatz um 180° phasenverschobene Kompensationssignal K dem Signalzusatz entgegenwirken kann. Die Steuerung der Kompensationseinheit 4 erfolgt durch den Mikrocontroller 12. Dieser initiiert und beendet die Kompensation und steuert die Einstellung der Höhe des Kompensationssignals K. Auswerteeinheit 11 und Mikrocontroller 12 können auch gemeinsam implementiert sein, d.h. der Mikrocontroller 12 übernimmt die Aufgaben der Auswerteeinheit 11. In einer anderen Ausgestaltung ist die Kompensationseinheit 4 digital ausgestaltet, beispielsweise als Mikrocontroller 12.

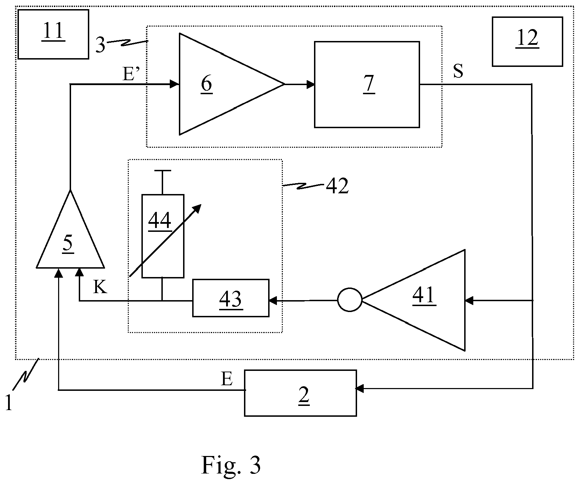

Fig. 3 zeigt eine vorteilhafte Ausgestaltung der Elektronikeinheit 1 für den Fall, dass der kopplungsbedingte Signalzusatz im Empfangssignal E gegenüber dem Sendesignal S eine Phasenverschiebung von 180° aufweist. Die Regeleinheit 3 umfasst zur Erzeugung des Sendesignals S aus dem modifizierten Empfangssignal E' einen Verstärker 6, sowie einen Phasenschieber 7. Die Kompensationseinheit 4 weist einen Inverter 41 und einen Spannungsteiler 42 auf. Das Sendesignal S wird dem Inverter 41 zugeführt, welcher ein invertiertes Sendesignal erzeugt. Das invertierte Sendesignal wird dem Spannungsteiler 42 zugeführt, welcher das invertierte Sendesignal mit einem einstellbaren Dämpfungsfaktor dämpft. Der Spannungsteiler 42 besteht daher aus einem festen Widerstand 43 und einem einstellbaren Widerstand 44. Die Einstellung des Dämpfungsfaktors erfolgt über den einstellbaren Widerstand 44 und wird von dem Mikrocontroller 12 gesteuert. Das so erzeugte Kompensationssignal K wird über einen Addierer 5 auf das Empfangssignal E eingekoppelt.

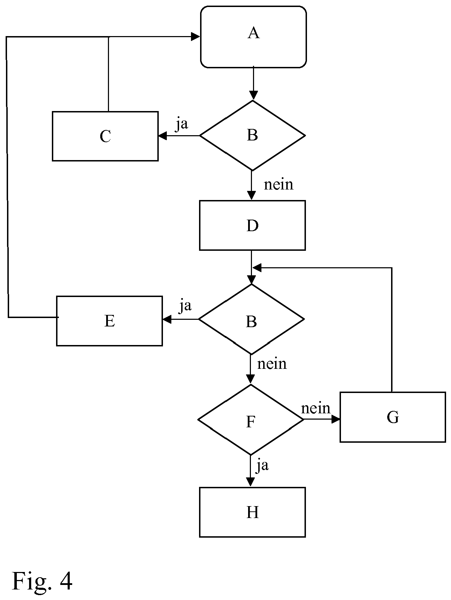

Fig. 4 offenbart ein Flussdiagramm einer Ausgestaltung des Verfahrens zur Durchführung der Kompensation. In einem ersten Schritt A wird die aktuelle Schwingfrequenz bestimmt. Dies erfolgt beispielsweise in der Auswerteeinheit oder in einem Mikrocontroller.

Im nächsten Schritt B wird geprüft, ob die Schwingfrequenz einer gültigen Sensorfrequenz entspricht, d.h. innerhalb eines Bereiches zwischen einer minimalen dem Bedecktzustand zugeordneten Frequenz und einer maximalen dem unbedeckten Zustand zugeordneten Frequenz liegt.

Schritt C wird durchgeführt, falls das Ergebnis der Prüfung positiv ist. Entspricht die Schwingfrequenz einer gültigen Sensorfrequenz, ist keine Kompensation erforderlich. Beispielsweise wird hierzu das dämpfende Element derart eingestellt, dass das Kompensationssignal Null wird. Das Empfangssignal wird dann unverändert der Regeleinheit zugeführt.

Schritt D wird entsprechend alternativ zu Schritt C durchgeführt, falls sich ergeben hat, dass die Schwingfrequenz keiner gültigen Sensorfrequenz entspricht. Es wird ein vorgegebener Dämpfungsgrad eingestellt, sodass ein Kompensationssignal entsprechender Höhe entsteht. In einer bevorzugten Ausgestaltung wird mit einer hohen Dämpfung begonnen, sodass ein Kompensationssignal geringer Höhe erzeugt wird, und in nachfolgenden Schritten die Dämpfung immer weiter verringert. Hierdurch soll eine Überkompensation vermieden werden.

Auf die Einstellung der Kompensationseinheit folgt erneut eine Abfrage gemäß Schritt B. Reicht das erzeugte Kompensationssignal aus um die Schwingung mit der vom Sensor vorgegebenen Sensorfrequenz zu ermöglichen, kann in einem Schritt E die Kompensation beendet werden. Entweder wird die Kompensation sofort beendet, oder das Kompensationssignal wird allmählich so weit wie möglich verringert, sodass im Idealfall ebenfalls keine Kompensation mehr stattfindet. In einer alternativen Ausführung wird die Kompensation mit dem eingestellten Dämpfungsgrad fortgeführt.

Ergibt die erneute Abfrage gemäß Schritt B, dass die Schwingfrequenz weiterhin keiner gültigen Sensorfrequenz entspricht, wird in Schritt F abgefragt, ob die aktuelle Schwingfrequenz der oberen Abrissfrequenz entspricht, und/oder ob die Kompensation bereits maximal ist, d.h. die geringstmögliche Dämpfung eingestellt ist. Entspricht die Schwingfrequenz der oberen Abrissfrequenz, liegt eine Überkompensation vor. Wird eine der beiden Abfragen in Schritt F bejaht, ist somit keine weitere Kompensation möglich. Alternativ können das Empfangssignal und die Phasenverschiebung gemessen werden und daraus bestimmt werden, ob eine Überkompensation vorliegt.

In Schritt H wird die Kompensation daher beendet. In einer Ausgestaltung wird dann die Kompensation erneut durchgeführt, indem wieder mit der geringsten Kompensation begonnen wird. In einer Ausgestaltung wird in Schritt H eine Fehlermeldung erzeugt. Funktioniert die Kompensation nicht, kann dies an einer Beschädigung von elektrischen Leitungen oder - insbesondere im Fall einer Schwinggabel - an einer Blockade der schwingfähigen Einheit liegen, sodass eine Wartung des Messgerätes erforderlich ist. In einer hier nicht dargestellten Abwandlung des Verfahrens wird die Kompensation sukzessive wieder erniedrigt, falls die obere Abrissfrequenz detektiert wird oder allgemein eine Überkompensation vorliegt.

Wird die Abfrage in Schritt F verneint bedeutet dies, dass eine Unterkompensation vorliegt, welche nicht ausreicht, die Schwingung mit einer Resonanzfrequenz der schwingfähigen Einheit wieder herzustellen. In Schritt G wird daher die Kompensation weiter erhöht, d.h. die Dämpfung des gegebenenfalls invertierten Sendesignals im Kompensationspfad verringert, sodass ein höheres Kompensationssignal erzeugt wird. Es folgt erneut eine Abfrage gemäß Schritt B. Die Schritte F, G und B werden so lange wiederholt, bis eine gültige Sensorfrequenz erreicht ist, sodass mit Schritt E fortgefahren werden kann, oder bis die Abfrage in Schritt F bejaht wird, d.h. keine weitere Kompensation möglich ist und Schritt H folgt.

### Bezugszeichenliste

- 1: Elektronikeinheit
- 11: Auswerteeinheit
- 12: Mikrocontroller
- 2: Sensoreinheit
- 21: Mechanische Komponente
- 22: Kopplung
- 23: Mechanisch schwingfähige Einheit
- 231: Membran
- 232: Zinken
- 24: Empfangseinheit
- 25: Sendeeinheit
- 26: Isolation
- 3: Regeleinheit
- 4: Kompensationseinheit
- 41: Inverter
- 42: Spannungsteiler
- 43: Elektrischer Widerstand
- 44: Einstellbarer elektrischer Widerstand
- 5: Addierer
- 6: Verstärker
- 7: Phasenschieber

## Patentansprüche

1. Vorrichtung zur Bestimmung und/oder Überwachung zumindest eines vorbestimmten Füllstandes einer Flüssigkeit in einem Behälter, mit einer Sensoreinheit (2), mindestens umfassend eine auf der Höhe des vorbestimmten Füllstandes anordenbare mechanisch schwingfähige Einheit (23), eine Sendeeinheit (25), welche die schwingfähige Einheit (23) mittels einem elektrischen Sendesignal (S) zu mechanischen Schwingungen anregt, und eine Empfangseinheit (24), welche mechanisch und elektrisch mit der Sendeeinheit (25) gekoppelt ist, und welche die Schwingungen der schwingfähigen Einheit (23) in ein elektrisches Empfangssignal (E) umwandelt, und mit einer Elektronikeinheit (1), mindestens umfassend eine Auswerteeinheit (11), welche aus dem elektrischen Empfangssignal (E) bestimmt, ob die schwingfähige Einheit von einem Füllgut bedeckt oder unbedeckt ist, und eine Regeleinheit (3), welcher eine zwischen dem elektrischen Sendesignal (S) und dem elektrischen Empfangssignal (E) bestehende Phasendifferenz auf einen bestimmten Wert regelt, bei dem die schwingfähige Einheit (23) Schwingungen mit einer Resonanzfrequenz ausführt, und welche mit der Sendeeinheit (25), der Empfangseinheit (24) und der schwingfähigen Einheit (23) einen Schwingkreis bildet,
wobei die Elektronikeinheit (1) einen Kompensationspfad mit einer Kompensationseinheit (4) aufweist, welche zur Kompensation von zusätzlichen Signalanteilen im Empfangssignal (E) dient, wobei die zusätzlichen Signalanteile im Empfangssignal (E) aus der mechanischen und/oder elektrischen Kopplung zwischen Sendeeinheit (25) und Empfangseinheit (24) resultieren, wobei die Kompensationseinheit (4) zumindest zeitweise aus dem Sendesignal (S) ein Kompensationssignal (K) erzeugt und dem Empfangssignal (E) zuführt, wobei die Kompensationseinheit (4) das Kompensationssignal (K) derart erzeugt, dass das Kompensationssignal (K) den zusätzlichen Signalanteilen im Empfangssignal (E) entgegengerichtet ist,
**dadurch gekennzeichnet,**
**dass** die Kompensationseinheit (4) zumindest ein einstellbares dämpfendes Element (42) zum dynamischen Kompensieren der zusätzlichen Signalanteile im Empfangssignal (E) aufweist,
**dass** die Steuerung der Kompensationseinheit (4) durch einen Mikrocontroller (12) erfolgt, der dazu ausgestaltet ist, die Kompensation zu initiieren und zu beenden und die Einstellung der Höhe des Kompensationssignals (K) zu steuern,
**dass** die Kompensationseinheit (4) zur Erzeugung des Kompensationssignals (K) das Sendesignal (S) im Kompensationspfad in Abhängigkeit einer aktuellen Schwingfrequenz des Schwingkreises modifiziert und
**dass** die Kompensationseinheit (4) dazu ausgestaltet ist, zumindest dann ein Kompensationssignal (K) zu erzeugen, wenn die aktuelle Schwingfrequenz außerhalb eines Bereichs liegt, der, jeweils mit bestimmten Toleranzen, von der Schwingfrequenz einer bedeckten schwingfähigen Einheit und der Schwingfrequenz einer unbedeckten schwingfähigen Einheit begrenzt ist.

2. Vorrichtung nach Anspruch 1,
**dadurch gekennzeichnet,**
**dass** das dämpfende Element (42) ein Spannungsteiler oder Verstärker ist.

3. Vorrichtung nach einem der Ansprüche 1 bis 2,
**dadurch gekennzeichnet,**
**dass** das dämpfende Element (42) mehrere Dämpfungsgrade aufweist.

4. Vorrichtung nach einem der Ansprüche 1 bis3,
**dadurch gekennzeichnet,**
**dass** die Kompensationseinheit (4) ein invertierendes Element (41) aufweist.

5. Verfahren zur Kompensation von zusätzlichen Signalanteilen im Empfangssignal (E) einer Vorrichtung nach Anspruch 1, welche aus der mechanischen und/oder elektrischen Kopplung zwischen Sendeeinheit und Empfangseinheit resultieren,
wobei von der Kompensationseinheit aus dem Sendesignal (S) zumindest zeitweise ein Kompensationssignal (K) erzeugt und dem Empfangssignal (E) zugeführt wird, wobei das Kompensationssignal (K) derart erzeugt wird, dass das Kompensationssignal (K) den aus der Kopplung resultierenden zusätzlichen Signalanteilen im Empfangssignal (E) entgegengerichtet ist,
**dadurch gekennzeichnet,**
**dass** zum dynamischen Kompensieren der zusätzlichen Signalanteile im Empfangssignal (E) ein einstellbares dämpfendes Element (42) der Kompensationseinheit (4) verwendet wird,
**dass** die Kompensationseinheit (4) durch einen Mikrocontroller (12) gesteuert wird, wobei durch den Mikrocontroller (12) die Kompensation initiiert und beendet wird und die Einstellung der Höhe des Kompensationssignals (K) gesteuert wird,
**dass** zur Erzeugung des Kompensationssignals das Sendesignal (S) im Kompensationspfad in Abhängigkeit einer aktuellen Schwingfrequenz des Schwingkreises von der Kompensationseinheit (4) modifiziert wird und dass von der Kompensationseinheit (4) zumindest dann ein Kompensationssignal (K) erzeugt wird, wenn die aktuelle Schwingfrequenz außerhalb eines Bereichs liegt, der, jeweils mit bestimmten Toleranzen, von der Schwingfrequenz einer bedeckten schwingfähigen Einheit und der Schwingfrequenz einer unbedeckten schwingfähigen Einheit begrenzt wird.

6. Verfahren nach Anspruch 5,
**dadurch gekennzeichnet,**
**dass** das Sendesignal (S) mit einem einstellbaren Verstärkungsfaktor verstärkt und das verstärkte Signal dem Empfangssignal (E) zugeführt wird.

7. Verfahren nach Anspruch 5,
**dadurch gekennzeichnet,**
**dass** das Sendesignal (S) invertiert, mit einem einstellbaren Verstärkungsfaktor verstärkt und das invertierte und verstärkte Signal dem Empfangssignal (E) zugeführt wird.

8. Verfahren nach einem der Ansprüche 5 bis 7,
**dadurch gekennzeichnet,**
**dass** die aktuelle Schwingfrequenz des Schwingkreises bestimmt wird, und dass für den Fall, dass die Schwingfrequenz einer gültigen, der bedeckten oder unbedeckten schwingfähigen Einheit zugeordneten, Sensorfrequenz entspricht, keine Kompensation stattfindet.

9. Verfahren nach einem der Ansprüche 5 bis 8,
**dadurch gekennzeichnet,**
**dass** die aktuelle Schwingfrequenz des Schwingkreises bestimmt wird,
**dass** für den Fall, dass die Schwingfrequenz keiner gültigen, der bedeckten oder unbedeckten schwingfähigen Einheit zugeordneten, Sensorfrequenz entspricht, für die Kompensation ein geringstmöglicher Kompensationsgrad eingestellt wird,
und **dass** der Kompensationsgrad so lange erhöht wird, bis die Schwingfrequenz einer gültigen Sensorfrequenz entspricht, oder, falls keine gültige Sensorfrequenz erreicht wird, bis der höchstmögliche Kompensationsgrad erreicht ist, oder die Schwingfrequenz einer von der Elektronikeinheit vorgegebenen oberen Abrissfrequenz entspricht.

10. Verfahren nach einem der Ansprüche 5 bis 9,
**dadurch gekennzeichnet,**
**dass** die Kompensation beendet wird, sobald der höchstmögliche Kompensationsgrad eingestellt und keine gültige Sensorfrequenz erreicht ist, oder die von der Elektronikeinheit vorgegebene obere Abrissfrequenz erreicht ist.

11. Verfahren nach einem der Ansprüche 5 bis 9,
**dadurch gekennzeichnet,**
**dass** der eingestellte Kompensationsgrad beibehalten wird, sobald die Schwingfrequenz einer gültigen Sensorfrequenz entspricht.

## Claims

1. Apparatus for determining and/or monitoring at least a predefined level of a liquid in a vessel with a sensor unit (2), comprising at least one unit (23) that is capable of vibrating mechanically and can be arranged at the height of the predefined level, a transmission unit (25), which uses an electrical transmission signal (S) to excite the unit (23) that is capable of vibrating to produce mechanical vibrations, and a reception unit (24), which is mechanically and electrically coupled to the transmission unit (25), and which converts the vibrations of the unit (23) that is capable of vibrating into an electrical reception signal (E), and with an electronics unit (1), said unit comprising at least an evaluation unit (11), which uses the electrical reception signal (E) to determine whether the unit that is capable of vibrating is covered or not by a product, and a regulation unit (3), which regulates a phase difference between the electrical transmission signal (S) and the electrical reception signal (E) to a certain value at which the unit (23) that is capable of vibrating produces vibrations at a resonance frequency, and which forms a resonant circuit with the transmission unit (25), the reception unit (24) and the unit (23) that is capable of vibrating,
wherein the electronics unit (1) has a compensation path with a compensation unit (4), which is used to compensate for additional signal components in the reception signal (E), wherein the additional signal components in the reception signal (E) result from the mechanical and/or electrical coupling between the transmission unit (25) and the reception unit (24), wherein the compensation unit (4) at least temporarily generates a compensation signal (K) from the transmission signal (S) and supplies said compensation signal to the reception signal (E), wherein the compensation unit (4) generates the compensation signal (K) in such a way that the compensation signal (K) is opposed to the additional signal components in the reception signal (E),
**characterized in that**
the compensation unit (4) has at least an adjustable damping element (42) for the dynamic compensation of the additional signal components in the reception signal (E),
**in that** the compensation unit (4) is controlled by a microcontroller (12), which is designed to initiate and terminate the compensation, and to control the setting for the level of the compensation signal (K),
**in that** - for the purpose of generating the compensation signal (K) - the compensation unit (4) modifies the transmission signal (S) in the compensation path depending on a current vibration frequency of the resonant circuit, and
**in that** the compensation unit (4) is designed to generate a compensation signal (K) at least when the current vibration frequency is outside a range, said range being delimited - with certain tolerances - by the vibration frequency of a covered unit that is capable of vibrating and the vibration frequency of an uncovered unit that is capable of vibrating.

2. Apparatus as claimed in Claim 1,
**characterized in that**
the damping element (42) is a voltage divider or an amplifier.

3. Apparatus as claimed in one of the Claims 1 to 2,
**characterized in that**
the damping element (42) has multiple degrees of damping.

4. Apparatus as claimed in one of the Claims 1 to 3,
**characterized in that**
the compensation unit (4) has an inverting element (41).

5. Procedure designed to compensate for additional signal components in the reception signal (E) of an apparatus as claimed in Claim 1, said components resulting from the mechanical and/or electrical coupling between the transmission unit and the reception unit,
wherein the compensation unit at least temporarily generates a compensation signal (K) from the transmission signal (S) and the compensation signal is supplied to the reception signal (E), wherein the compensation signal (K) is generated in such a way that the compensation signal (K) is opposite to the additional signal components in the reception signal (E) resulting from the coupling,
**characterized in that**
an adjustable damping element (42) of the compensation unit (4) is used for the dynamic compensation of the additional signal components in the reception signal (E),
**in that** the compensation unit (4) is controlled by a microcontroller (12), wherein the compensation is initiated and terminated by the microcontroller (12) and the setting for the level of the compensation signal (K) is controlled,
**in that** - for the purpose of generating the compensation signal (K) - the transmission signal (S) is modified by the compensation unit (4) in the compensation path depending on a current vibration frequency of the resonant circuit, and
**in that** the compensation unit (4) generates a compensation signal (K) at least when the current vibration frequency is outside a range, said range being delimited - with certain tolerances - by the vibration frequency of a covered unit that is capable of vibrating and the vibration frequency of an uncovered unit that is capable of vibrating.

6. Procedure as claimed in Claim 5,
**characterized in that**
the transmission signal (S) is amplified by an adjustable amplification factor and **in that** the amplified signal is supplied to the reception signal (E).

7. Procedure as claimed in Claim 5,
**characterized in that**
the transmission signal (S) is inverted and amplified by an adjustable amplification factor and **in that** the inverted and amplified signal is supplied to the reception signal (E).

8. Procedure as claimed in one of the Claims 5 to 7,
**characterized in that**
the current vibration frequency of the resonant circuit is determined,
and **in that** no compensation takes place if the vibration frequency corresponds to a valid sensor frequency that is assigned to the covered or uncovered unit that is capable of vibrating.

9. Procedure as claimed in one of the Claims 5 to 8,
**characterized in that**
the current vibration frequency of the resonant circuit is determined,
**in that** - in the event that the vibration frequency does not correspond to any valid sensor frequency assigned to the covered or uncovered unit that is capable of vibrating - a minimum degree of compensation is set for the compensation, and **in that** the degree of compensation is increased until the vibration frequency corresponds to a valid sensor frequency,
or, in the event that a valid sensor frequency is not attained, up until the point where the highest possible degree of compensation is reached, or the vibration frequency corresponds to an upper cutoff frequency specified by the electronics unit.

10. Procedure as claimed in one the Claims 5 to 9,
**characterized in that**
the compensation is terminated as soon as the maximum possible degree of compensation is set and a valid sensor frequency is not attained, or the upper cutoff frequency specified by the electronics unit is reached.

11. Procedure as claimed in one of the Claims 5 to 9,
**characterized in that**
the configured degree of compensation is maintained as soon as the vibration frequency corresponds to a valid sensor frequency.

## Revendications

1. Dispositif destiné à la détermination et/ou la surveillance au moins d'un niveau prédéterminé d'un liquide dans un réservoir, avec une unité de capteur (2), comprenant au moins une unité apte à vibrer mécaniquement, pouvant être disposée à la hauteur du niveau prédéterminé, une unité d'émission (25), qui excite en vibrations mécaniques l'unité apte à vibrer (23) au moyen d'un signal d'émission électrique (S), et une unité de réception (24), laquelle est couplée mécaniquement et électriquement avec l'unité d'émission (25), et laquelle convertit les vibrations de l'unité apte à vibrer (23) en un signal de réception électrique (E), et avec une unité électronique (1), laquelle unité comprend au minimum une unité d'exploitation (11), laquelle détermine à partir du signal de réception électrique (E) si l'unité apte à vibrer est recouverte ou non d'un produit, et une unité de régulation (3), laquelle régule à une valeur déterminée une différence de phase existant entre le signal d'émission électrique (S) et le signal de réception électrique (E), différence pour laquelle l'unité apte à vibrer (23) exécute des vibrations à une fréquence de résonance, et laquelle unité forme avec l'unité d'émission (25), l'unité de réception (24) et l'unité apte à vibrer (23) un circuit résonnant,
l'unité électronique (1) comportant un trajet de compensation avec une unité de compensation (4), lequel trajet sert à la compensation de composantes de signal supplémentaires du signal de réception (E), les composantes supplémentaires du signal de réception (E) résultant du couplage mécanique et/ou électrique entre l'unité d'émission (25) et l'unité de réception (24), l'unité de compensation (4) générant au moins temporairement, à partir du signal d'émission (S), un signal de compensation (K) et l'achemine au signal de réception (E), l'unité de compensation (4) générant le signal de compensation (K) de telle sorte que le signal de compensation (K) s'oppose aux composantes supplémentaires du signal de réception (E),
**caractérisé**
**en ce que** l'unité de compensation (4) comporte au moins un élément amortisseur (42) réglable pour la compensation dynamique des composantes supplémentaires du signal de réception (E),
**en ce que** la commande de l'unité de compensation (4) s'effectue par un microcontrôleur (12), lequel est conçu de manière à initier et à arrêter la compensation, et à commander le réglage de la hauteur du signal de compensation (K),
**en ce que**, pour la génération du signal de compensation (K), le signal d'émission (S) est modifié dans le trajet de compensation par l'unité de compensation (4) en fonction d'une fréquence de vibration actuelle du circuit résonnant, et
**en ce que** l'unité de compensation (4) est conçue de telle sorte à générer un signal de compensation (K) au moins lorsque la fréquence de vibration actuelle se situe en dehors d'une zone, laquelle zone est délimitée, avec des tolérances déterminées, par la fréquence de vibration d'une unité apte à vibrer recouverte et la fréquence de vibration d'une unité apte à vibrer non recouverte.

2. Dispositif selon la revendication 1,
**caractérisé**
**en ce que** l'élément amortisseur (42) est un diviseur de tension ou un amplificateur.

3. Dispositif selon l'une des revendications 1 à 2,
**caractérisé**
**en ce que** l'élément amortisseur (42) comprend plusieurs degrés d'amortissement.

4. Dispositif selon l'une des revendications 1 à 3,
**caractérisé**
**en ce que** l'unité de compensation (4) comporte un élément inverseur (41).

5. Procédé destiné à la compensation de composantes supplémentaires du signal de réception (E) d'un dispositif selon la revendication 1, lesquelles composantes résultent du couplage mécanique et/ou électrique entre l'unité d'émission et l'unité de réception,
pour lequel l'unité de compensation génère, à partir du signal d'émission (S), au moins temporairement un signal de compensation (K) et est acheminé au signal de réception (E), le signal de compensation (K) étant généré de telle sorte que le signal de compensation (K) s'oppose aux composantes supplémentaires du signal de réception (E) résultant du couplage,
**caractérisé**
**en ce qu'**est utilisé, pour la compensation dynamique des composantes supplémentaires du signal de réception (E), un élément amortisseur (42) réglable de l'unité de compensation (4),
**en ce que** l'unité de compensation (4) est commandée par un microcontrôleur (12), la compensation étant initiée et terminée par le microcontrôleur (12) et le réglage de la hauteur du signal de compensation (K) étant commandée,
**en ce que**, pour la génération du signal de compensation, le signal d'émission (S) est modifié dans le trajet de compensation par l'unité de compensation (4) en fonction d'une fréquence de vibration actuelle du circuit résonnant, et
**en ce qu'**est généré, par l'unité de compensation (4), un signal de compensation (K) au moins lorsque la fréquence de vibration actuelle se situe en dehors d'une zone, laquelle zone est délimitée, avec des tolérances déterminées, par la fréquence de vibration d'une unité apte à vibrer recouverte et la fréquence de vibration d'une unité apte à vibrer non recouverte.

6. Procédé selon la revendication 5,
**caractérisé**
**en ce que** le signal d'émission (S) est amplifié avec un facteur d'amplification réglable et en ce que le signal amplifié est acheminé au signal de réception (E).

7. Procédé selon la revendication 5,
**caractérisé**
**en ce que** le signal d'émission (S) est inversé, amplifié avec un facteur d'amplification réglable, et le signal inversé et amplifié est acheminé au signal de réception (E).

8. Procédé selon l'une des revendications 5 à 7,
**caractérisé**
**en ce que** la fréquence de vibration actuelle du circuit résonnant est déterminée, et en ce que, pour le cas où la fréquence de vibration correspond à une fréquence de capteur valable affectée à l'unité apte à vibrer recouverte ou non recouverte, aucune compensation n'a lieu.

9. Procédé selon l'une des revendications 5 à 8,
**caractérisé**
**en ce que** la fréquence de vibration actuelle du circuit résonnant est déterminée, en ce que, pour le cas où la fréquence de vibration ne correspond à aucune fréquence de capteur valable affectée à l'unité apte à vibrer recouverte ou non recouverte, un degré de compensation minimal est réglé pour la compensation, et en ce que le degré de compensation est augmenté jusqu'à ce que la fréquence de vibration corresponde à une fréquence de capteur valable, ou, si aucune fréquence de capteur valable n'est atteinte, jusqu'à ce que le degré de compensation maximal soit atteint, ou jusqu'à ce que la fréquence de vibration corresponde à une fréquence de décrochage supérieure prédéfinie par l'unité électronique.

10. Procédé selon l'une des revendications 5 à 9,
**caractérisé**
**en ce que** la compensation est terminée dès que le degré de compensation maximal est réglé et qu'aucune fréquence de capteur valable n'est atteinte, ou dès que la fréquence de décrochage supérieure prédéfinie par l'unité électronique est atteinte.

11. Procédé selon l'une des revendications 5 à 9,
**caractérisé**
**en ce que** le degré de compensation réglé est conservé dès que la fréquence de vibration correspond à une fréquence de capteur valable.
